# EUROPEAN PATENT SPECIFICATION

(11) **EP 1 054 541 B1**
(45) Date of publication and mention of the grant of the patent: **01.02.2006**
(21) Application number: 99117253.7
(22) Date of filing: 02.09.1999
(51) Int. Cl.: H04L 27/26, H04L 25/06, H04L 1/00

(54) **Multicarrier receiver with soft decisions based on estimates of interference**
Mehrträgerempfänger mit auf Interferenzschätzungen basierten, weichen Entscheidungen
Récepteur multiporteuse à décisions douces, basées sur une estimation de l'interférence

(30) Priority: 21.05.1999 JP 14128799; 16.08.1999 JP 22985299
(43) Date of publication of application: 22.11.2000
(73) Proprietor: KABUSHIKI KAISHA TOSHIBA, Kawasaki-shi, Kanagawa 212-8572 (JP)
(72) Inventor: Aizawa, Masami, c/o K. K. Toshiba - Intellectual, Minato-ku, Tokyo (JP)
(74) Representative: Henkel, Feiler & Hänzel

(56) References cited:
- EP-A- 0 689 312
- EP-A- 0 772 329
- EP-A- 0 963 086
- FR-A- 2 742 613
- GB-A- 2 326 070

## Description

The present invention relates to an error correction device which is used in a receiver for receiving a frequency division multiplex signal through a plurality of carriers as, for example, in the OFDM (orthogonal frequency division multiplex) format, and which manifests maximum correction performance when components are present in a received signal which have suffered frequency selectivity interference (e.g. spurious signals, multipass, or same or neighboring channel interference) leading to a reduction in demodulation performance.

As is widely known, the OFDM format has attracted attention as one of the optimum digital transmission formats for groundwave digital television broadcasts. In this OFDM format, data is allocated to a plurality of carriers orthogonally intersecting each other and modulation and demodulation are performed. The transmitting side performs IFFT (Inverse Fast Fourier Transfer) processing in order to convert frequency domain signals into time domain signals. The receiving side performs FFT (Fast Fourier Transfer) processing in order to restore the time domain signals to frequency domain signals.

In the above OFDM format, each carrier is able to use an optional modulation format. For example synchronous detection transmission or delayed detection transmission are both possible. In synchronous detection, a pilot having an established amplitude and phase is inserted at the transmitting side at a predetermined position on the frequency axis and the time axis. On the receiving side, the pilot is extracted and errors relating to the established values of the amplitude and phase are obtained. According to the results of the detection of the errors, the amplitude and phase of the received signals are equalized. In delayed detection transmission, a received signal is demodulated without performing carrier regeneration by performing differential encoding between the receiving symbols.

However, reflected waves known as multipass are present on the transmission path. When the level of these reflected waves is large, the direct waves and the reflected waves negate each other and the signal level of particular carriers is diminished. Moreover, spurious signals may be generated in the transmission band or same channel interference such as analog television broadcasts may be present which also cause the signal level of particular carriers to vary greatly.

On the other hand, error correction is indispensable in digital transmissions from the viewpoints of signal deterioration on the transmission path and improvement in transmission characteristics. An error correction device used in a conventional OFDM receiving device uses the signals transmitted by all the carriers to perform error correction. Therefore, even when only particular carriers suffer a large amount of harm from the above described multipass, spurious signals, and same channel interference from analog TV broadcasts, error correction ends up being performed using the signals of those carriers. The result is that the characteristics are adversely affected and end up deteriorating overall. This problem is not limited to OFDM but occurs in all receivers which receive other digital transmission format multiplex signals such as spectral spreading.

As described above, in a conventional error correction device used in a receiver for digital transmission format multiplex signals, even when only particular carriers suffer a large amount of harm from multipass, spurious signals, and same channel interference (referred to below as frequency selectivity interference), error correction ends up being performed using the signals of those carriers resulting in the characteristics being adversely affected and ending up deteriorating overall.

EP-A-0 689 312 discloses an error correction device according to the pre-characterizing part of claim 1.

Additionally, GB 23 26 070 discloses a demodulator for digital video broadcast signals wherein, when the degree of reliability obtained is smaller than a predescribed value no loss correction is performed.

An object of the present invention is to provide an error correction device which solves the above problems by performing effective error correction and improving characteristics even when frequency selectivity interference occurs in a receiver for receiving a frequency division multiplex signal.

The above objects are achieved by an error correction device according to claim 1 and a by a receiver according to claim 5. The dependent claims are directed to further advantageous aspects of the present invention.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a block diagram showing the structure of an OFDM receiver provided with the error correction device according to a first embodiment of the present invention.
FIG. 2 is a diagram showing the spectrum of an OFDM transmission wave.
FIG. 3 is a diagram showing the spectrum of an OFDM reception signal affected by multipass.
FIG. 4 is a diagram showing the spectrum of an OFDM reception signal affected by multipass which has been equalized.
FIG. 5 is a diagram showing the spectrum of an OFDM reception signal affected by same channel interference.
FIG. 6 is a diagram showing the relationship between the weighting factor and the required CN characteristic.
FIG. 7 is a block diagram showing the structure of an OFDM receiver provided with the error correction device according to a second embodiment of the present invention.
FIG. 8 is a block diagram showing the structure of an OFDM receiver provided with the error correction device according to a third embodiment of the present invention.
FIG. 9 is a diagram showing a state of distribution of reception symbols for explaining the distribution detection according to the third embodiment.
FIG. 10 is a diagram showing an example of the soft decision used in the third embodiment.
FIG. 11 is a diagram showing an example of changing the determination level of the distribution values according to the modulation format in the third embodiment.
FIGS. 12A and 12B are diagrams showing examples when the loss range is changed according to the amplitude level of the distribution caused by the interference in the third embodiment.
FIG. 13 is a diagram showing an example when the sum of an aggregate of representative symbols of a plurality of modulation formats is taken and used to define a new representative symbol.
A detailed explanation is given below of the embodiments of the present invention with reference made to the figures.

### (First Embodiment)

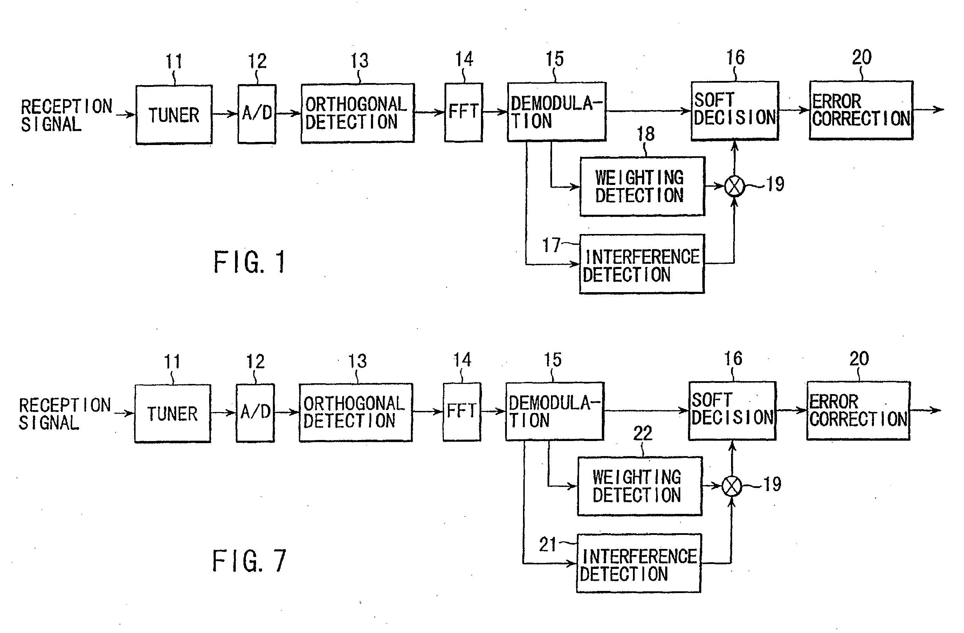

FIG. 1 is a block diagram showing the structure of an OFDM receiver provided with the error correction device according to the first embodiment. In FIG. 1, a reception signal received by an unillustrated antenna system is selected by a tuner 11, and is converted into a digital signal by an A/D converter 12. It is then fed to an orthogonal detection section 13. The orthogonal detection section 13 converts the reception signal into a base band OFDM signal by quasi-synchronous orthogonal detection and the OFDM signal thus obtained is fed to an FFT processing section 14. The FFT processing section 14 converts the input time domain OFDM signal to a frequency domain signal and obtains a symbol data string showing the phase and amplitude of each carrier. The signal thus obtained is then fed to a demodulation section 15.

The demodulation section 15 extracts the transmission mode signal from the input signal and determines the mode information. Either synchronous detection or delayed detection is carried out according to the result of this determination. Namely, when the transmission mode is synchronous detection, the fact that pilot signals, which are used as references in the frequency direction and time direction of the OFDM signal, are inserted cyclically is used by each pilot signal being extracted and the transmission function of each carrier being assumed from the amplitude and phase of the pilot signals. As a result of this assumption, the amplitude and phase equalization of each signal symbol is carried out. At this time, because the pilot signal is inserted sporadically, interpolation processing is carried out on both the frequency axis and the time axis and a reference signal corresponding to each symbol is obtained. The equalization is performed by comparing the reference signal and the reception symbol. When the transmission mode is delayed detection, detection is possible without regenerating the carrier by performing a complex calculation using the surrounding symbols. Unlike synchronous detection, delayed detection does not require a pilot signal.

The demodulation signal, synchronously detected or delay detected in the above described demodulation section 15, is fed to a soft decision section 16. Further, the reception signal before detection is fed to an interference detection section 17, and the transmission mode signal is fed to a weighting detection section 18. The interference detection 17 detects the amount of interference from the reception signal and the interference detection signal thus obtained is fed to a multiplier 19. Further, the above weighting detection section 18 is provided in advance with a weighting factor table corresponding to a plurality of encoding ratios and modulation formats, and acquires information on the encoding ratio and modulation format of the transmitted signal from the transmission mode signal. The weighting detection section 18 thus obtains the weighting factor which is then fed to the above multiplier 19. The multiplier 19 corrects the weighting factor by multiplying the weighting factor from the weighting detection section 18 and the interference detection signal from the interference detection section 17. The resulting weighting factor is then fed to the soft decision section 16.

The soft decision section 16 performs soft decision on the demodulation signal on the basis of the weighting factor from the multiplier 19 and the results of the soft decision are fed to the error correction section 20. The error correction section 20 carries out error correction processing such as Viterbi decoding and loss correction on the output from the soft decision which is then output from the error correction section 20.

The above soft decision section 16, interference detection section 17, weighting detection section 18, and error correction section 20 form the structure of the error correction device of the present invention.

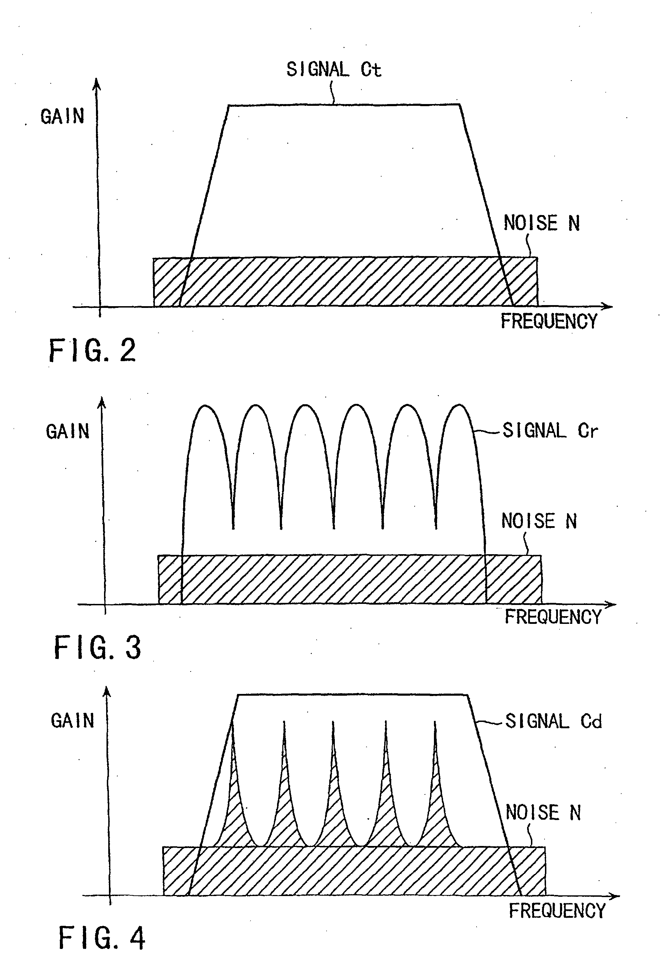

The operation of the error correction device section in a receiver having the above structure will now be explained with reference to FIGS. 2 through 6.

Firstly, the frequency spectrum of an OFDM transmission wave received by the above receiver has flat characteristics as shown by Ct in FIG. 2. Note that N in FIG. 2 indicates a noise component generated in the reception band. This noise component N is thermal noise known as gauss noise and is distributed uniformly across the entire reception band. If multipass is present during the reception of the OFDM transmission wave, the frequency spectrum of the received OFDM wave contains dips in the portions where interference has been generated by the multipass, as shown by Cr in FIG. 3.

In this case, in the present receiver, the received OFDM wave Cr is equalized by the pilot signal contained therein. Therefore, the demodulation signal is restored to its original flat state, as shown by Cd in FIG. 4. However, during this equalization, the portions corresponding to the noise components N are enlarged in the same way as the portions where the dips are generated are enlarged. Therefore, large levels of noise and small levels of noise are mixed in and weighted in the demodulation signal Cd, as shown in FIG. 4. This fact is similar to a case of delayed detection values.

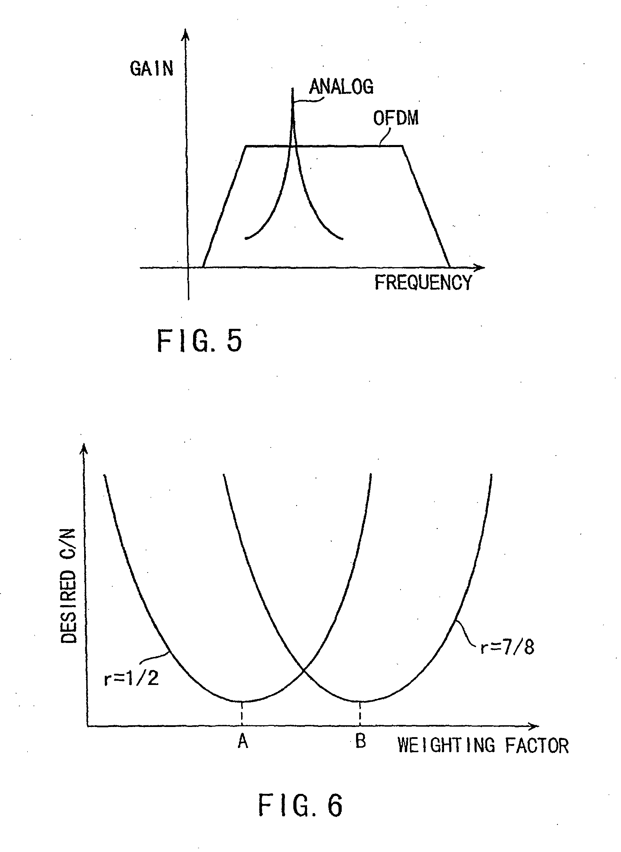

Further, as shown in FIG. 5, when a same channel analog TV signal is received simultaneously with the above OFDM signal, the effects of interference are received in the portions corresponding to the color sub-carrier of the analog TV signal or to the frequency of the sound signal and the CN ratio of those portions deteriorates remarkably.

The fact that a higher level of correction performance can be obtained by applying weighting according to the noise level, instead of simply correcting this type of demodulation signal in its current state, has already been reported in "Error Control in Consideration of Terrestrial Transmission Path Characteristics", Annual Assembly of the Visual Information Media Society 3-1, 1998 (by Harada, Aizawa, Sato, and Sugimoto).

Various types of interference to ground wave digital broadcasts extending across various fields exist such as multipass (ghosting), phasing (variation in the phase and power of the signal due to movement), interference from analog TV broadcasts, and spurious signals. Moreover, as regards the ground wave digital broadcast transmission formats, a plurality of modulation formats such as QPSK and 64QAM are being standardized so as to be able to be used together. Because a plurality of encoding ratios can be taken for each modulation format, the problem exists that, when considering the properties of the interference, if emphasis is given to either the properties of the contents of the interference or the properties of the modulation format, then the properties cannot be optimized under different conditions.

FIG. 6 shows the characteristics of each weighting factor when the encoding ratio r=1/2 and when r=7/8, when the horizontal axis shows the weighting factor and the vertical axis shows the desired CN. As can be seen from FIG. 6, the optimum weighting A when the encoding ratio r=1/2 and the optimum weighting B when the encoding ratio r=7/8 are different. From this, if the weighting factor is set to the value of A or B, or to an intermediate value between the two, then a deterioration in the characteristics of one or both cannot be avoided. However, if the weighting ratio is made to be switchable according to the encoding ratio of the transmission signal, then the optimum values of each, namely A and B, can be obtained. The same procedure can be followed for the modulation format.

In the error correction device according to the present embodiment, weighting factor tables which correspond to each encoding ratio and modulation format are stored in advance in the weighting detection section 18. Information on the encoding ratio and the modulation format of the transmitted signal is acquired from the transmission mode signal obtained in the modulation section 15 and the appropriate weighting factor table is selected. The weighting factor in that table is then output. The amount of interference is detected by the interference detection section 17 from the reception signal before detection, and the optimum weighting factor is obtained by multiplying the amount of interference by the weighting factor using the multiplier 19. Soft decision is performed on the demodulation signal on the basis of the weighting factor thus obtained, error correction processing is performed and the demodulation signal is output.

Accordingly, because optimum weighting factors corresponding to the encoding ratio and modulation format of a reception signal can be selected in a receiver having the above structure, error correction can be performed effectively on frequency selectivity interference and the characteristics improved even when a signal in any encoding ratio and modulation format is received.

### (Second Embodiment)

Note that the term error correction describes a process in which redundancy in the encoded bits is increased when information bits are encoded, and errors which are generated on the transportation path are assumed from the characteristics of the redundancy and deleted. In this way, redundancy is increased in the information bits by the encoding process, however, in wireless transmission, even if resistance to interference is sacrificed in consideration of transmission conditions, the encoding ratio, in other words, redundancy, is controlled so that more information can be sent. This control of the encoding ratio is generally performed by eliminating a portion of the encoded bits, known as punctures.

On the other hand, when the encoding ratio is high, if a large amount of weighting correction is performed, then the redundancy brought about by the encoding is lost and the correction itself becomes difficult. When the encoding ratio is low, sufficient redundancy is ensured, however, totally unreliable, erroneous signals are mixed in. This leads to errors in demodulation becoming a problem and, if the amount of loss is low, the erroneous operation caused by the interference becomes predominant. For example, when the encoding ratio is r=1/2, the amount of loss is 1.0 time the ordinary value and when r=7/8, the amount of loss is 2.0 times the ordinary value.

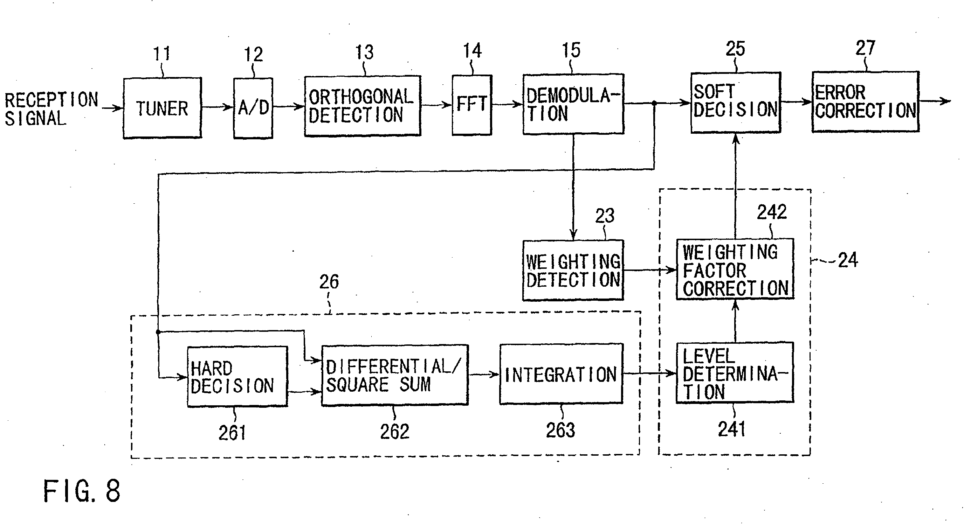

FIG. 7 is a block diagram showing the structure of an OFDM receiver provided with an error correction device according to the second embodiment. In this embodiment, in view of the above problems, the weighting factor is controlled by the detection of a further plurality of types of interference. In the explanation of FIG. 7 below, only those portions which are different to FIG. 1 are explained.

The error correction device of the present embodiment as shown in FIG. 7, comprises a soft decision section 16, an interference detection section 21, a weighting detection section 22, a multiplier 19, and an error correction section 20. The error detection section 21 not only detects the amount of interference, in the same way as does the interference detection section 17 of FIG. 1, but also determines the type of interference affecting the reception signal (for example, interference from analog TV broadcasts, multipass interference, and spurious signal interference) and imparts the information on the content of the determination and on the amount of interference to the weighting detection section 22. The weighting detection section 22 is not provided with weighting factor tables which only correspond to the encoding ratio and modulation format, as is the case with the weighting detection section 18 in FIG. 1, but is provided with a plurality of weighting factor tables representing weighting factors which correspond to the amount of interference for each type of interference in addition to the encoding ratio and the modulation format. Moreover, the weighting detection section 22 acquires information on the content of the interference and the amount of interference from the interference detection section 21 as well as acquiring information on the encoding ratio and modulation format from the transmission mode signal from the demodulation section 15, and determines the relevant table from this information. The weighting factor corresponding to the amount of interference is then obtained and output to the multiplier 19.

As the method used for determining the content of the interference in the above interference detection section 21, the generation of peaks in a predetermined frequency is used for interference from analog TV broadcasts. In this case, a weighting factor table is prepared for each established peak frequency in the weighting detection section 22, a table is then selected according to the detected peak frequency, and a weighting factor corresponding to the amount of interference is obtained. When the interference is from multipass, the ratio of the strength of the reception of the main wave to the strength of the reception of the reflected wave is detected. In this case, weighting factor tables are prepared in stages for this ratio in the weighting detection section 22, a table is selected according to the detected ratio, and a weighting factor corresponding to the amount of interference is obtained. When the interference is from a spurious signal, the amount of delay between the main wave and the radiation waves is detected. In this case, weighting factor tables are prepared in stages for the amount of the delay in the weighting detection section 22, a table is selected according to the detected amount of the delay, and a weighting factor corresponding to the amount of interference is obtained.

In this way, in the error correction device of the present embodiment, a table is selected in accordance not only with the encoding ratio and the modulation format, but also with the type of interference. A weighting factor corresponding to the amount of interference is then obtained and correction is performed depending on the amount of interference. Thus, a more appropriate weighting factor can be obtained and more accurate correction can be carried out using this weighting factor.

Note that the explanation given for the first and second embodiments was for when a plurality of types of both encoding ratio and modulation format of the transmitted signal exist, however, the present invention is applicable when a plurality of types of only the encoding ratio or only the modulation format exist. Moreover, the present invention may also be applied only to a specific encoding ratio or modulation format at the receiver side.

Further, the weighting factor tables may be stored in memory such as ROM in the above weighting detection section 18 or 22, however, the weighting factor tables may also be obtained by calculation for each operation. Moreover, when limitations and the like on the amount of memory exist, weighting factor tables may be calculated when necessary and stored in memory.

The error correction device according to the present invention is, of course, not limited to OFDM receivers and may be applied to other types of digital transmission format multiplex signals such as spectral spreading allowing the same effects to be obtained.

### (Third Embodiment)

In a conventional receiver, the technique employed is to perform a process of interference detection either by only determining the reliability of the reception symbol through pilot interpolation or by only detecting the distribution values of the reception symbol. Each process has both advantages and disadvantages and the problem has existed that the application of each is only appropriate for a particular interference. For example, interference detection using pilot interpolation does not work properly for spurious signal and same channel interference. In the same way, interference detection using distribution values has difficulties in tracking on a transmission path having severe time variations such as a phasing transmission path. Moreover, compared with a burst pilot the reliability of the detection is low and sufficient capability is only evidenced in a small portion of the transmission path. Further, a problem when performing distribution detection is that because hierarchical transmission is carried out in the Japanese ISDB-T format, the modulation format is unclear due to interleaving and hard decision in the demodulation section is difficult.

The object of the third embodiment explained below is to solve the above described problems.

FIG. 8 shows the structure of an OFDM receiver provided with an error correction device according to the third embodiment. Note that the present embodiment is the same as the first embodiment as far as the demodulation section and, therefore, the same portions as in FIG. 1 are given the same symbols. Here, the error correction section is explained. The OFDM transmission format used here is synchronous detection mode having pilot signals inserted in a predetermined array in the frequency direction and in the time direction.

Firstly, in the demodulation section 15, a pilot signal and the interpolation signal thereof extracted from the reception signal are fed to a weighting detection section 23 for equalization processing. The weighting detection section 23 determines the reliability of each carrier from the amplitude of each pilot signal and interpolation signal thereof. The weighting section 23 then obtains a weighting factor according to the extent of the reliability and feeds the weighting factor thus obtained to an interference detecting section 24.

Meanwhile, the signal synchronously detected in the demodulation section 15 is fed to a soft decision section 25 and to a distribution detection section 26. The distribution detection section 26 performs hard decision on each signal symbol of the demodulation signal in a hard decision section 261, and the values of the differential/square sum of the results of the hard decision and the demodulation signal for each carrier are obtained in a differential/square sum calculation section 262. These results are then fed to an integration section 263. The integration section 263 integrates the input signal of each carrier or of a portion of the carriers for a fixed time thus obtaining distribution values for a demodulation signal. The distribution values thus obtained are fed to the interference detection section 24.

The interference detection section 24 compares the distribution values from the distribution detection 26 with predetermined threshold values in a level. determination section 24 and detects the amount of interference due to multipass, spurious signals, and same channel analog TV signals. In addition, the interference detection section 24 determines positions on a frequency axis where the interference is generated and corrects the weighting factor from the weighting detection section 23 on the basis of the amount of the interference and the position of the interference on the frequency axis. The weighting factor thus corrected is fed to the soft decision section 25.

The soft decision section 25 allocates a weighting to each symbol of the demodulation signal from the demodulation section 15 on the basis of the weighting factor from the interference detection section 24, to thereby obtain a soft decision value. The soft decision value thus obtained for each signal symbol is fed to an error correction section 27 where it undergoes error correction such as loss correction and is output.

The operation of the above described structure will be now explained.

Firstly, operations concerning the content of the interference are the same as described for the first embodiment. Namely, when the interference is same channel interference from an analog TV broadcast, an analog TV signal is superposed on an identical channel selected by a tuner 11 and significant noise in addition to thermal noise (gauss noise) becomes attached to the carriers of particular frequencies, leading to an increase in carrier error. When a signal transmitted on a multipass transmission path is received, the spectrum of the reception signal is restored to a flat state on a frequency axis by either equalization through the pilot signal or delay detection, however, because the dips in the gain are equalized, the noise increases by the same amount, C/N appears to deteriorate, and the spectrum has a different C/N value for each carrier. The distribution values at this time for each signal symbol increase. Namely, the size of the distribution value can be regarded as information on the amount of the interference.

In the above described distribution detection section 26, a representative symbol point which is closest to the equalized symbol is obtained in the hard decision section 261 (hard decision), and the sum of the differential/square (i.e. the Euclidean distance) of the detected representative symbol and the equalized symbol is obtained in the differential/square sum calculation section 262. Then, in the integration section 263, the result of the differential/square sum calculation is integrated in the time direction for each carrier, thus enabling the distribution value of the relevant carrier to be obtained.

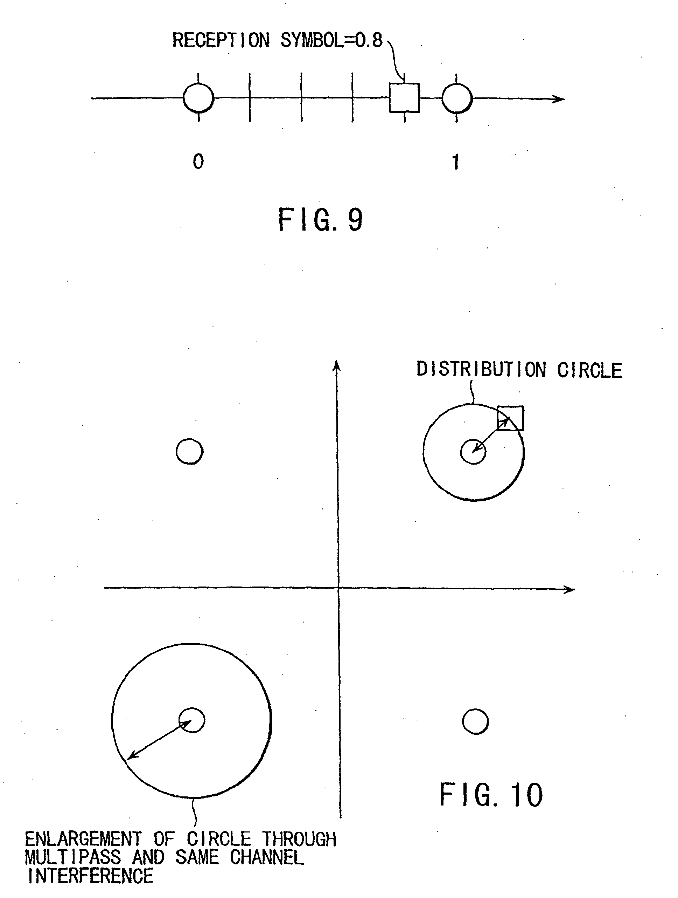

When the noise is gauss noise, the reception symbol exists with the original transmission symbol point (the established representative symbol point) in the center thereof and the distribution indicates the radius of the reception symbol. If the vector of the transmission symbol of the carrier k is set as Sk, the noise N, and the reception symbol as Pk, then the expression becomes: Pk = Sk + N. FIG. 9 shows the state of the distribution of a reception symbol.

In FIG. 9, the minimum distance (1,1) - (1,-1) between reception symbols and representative symbols is 2. When the noise does not exceed the distance between symbols, the result Pk' of the hard decision matches the transmission symbol. In other words, the noise component is expressed as N = Pk- Sk. Therefore, if the hard decision is set as Pk' = Sk, the noise component can be expressed as the differential between the hard decision and the demodulation signal, i.e. N = Pk' - Sk. Moreover, the noise N sometimes changes moment by moment and the directionality thereof becomes a uniform random number. Therefore, the power of the noise can be assumed by obtaining the sum of squares and performing an integration process. In the same way, when same channel interference is present, the reception symbol circle is enlarged and a large distribution value is calculated.

Next, the error correction method will be explained. Pre-error correction processes include hard decision decoding, in which each reception symbol is compared with previously established representative symbols and is given the value of the closest representative symbol and then decoded, and soft decision decoding in which the reception point is measured in stages using the Euclidean distance and the like between each reception symbol and the representative symbols. FIG. 10 shows an example of soft decision. A further method called loss correction exists in which not much importance is given to the correction when the reliability of the relevant reception information is low. This loss correction does not involve correction using information having low reliability in its current state, but involves correction after lowering the reliability of the information enabling the overall correction performance to be increased.

In the present embodiment, the pilot signals for the transfer function estimation used for equalization and the interpolated signals of the pilot signals are superposed in the demodulation section 15 and input to the detection section 23. In the detection section 23, the reliability of each carrier is determined from the amplitude of each signal, i.e. from the strength of each signal and a weighting factor is selected according to the degree of that reliability. In this case, the degree of reliability is split into stages and a weighting table corresponding to each stage is prepared in advance. If a suitable table is selected from degrees of reliability determined in this way, real time processing becomes easily achievable.

In the interference detection section 24, the existence or otherwise of interference in the frequency selectivity is determined by determining the level of the distribution value obtained in the distribution detection section 26. The weighting factor from the weighting detection section 23 is corrected on the basis of the result of this determination. Soft decision is performed for each carrier of the demodulation signal in the soft decision section 25 using the corrected weighting factor. Accordingly, because a weighting corresponding to the reliability of each carrier is allocated to each carrier, the accuracy of the loss correction in the error correction section 27 can be increased.

The processing operation of the present embodiment will now be explained using specific examples.

Firstly, because, in same channel interference, there is no particular correlation between the frequency spacings of an OFDM transmission wave, there is no interrelation between the interference wave and the pilot signal. Therefore the extent of the effects of the interference differs as the interference peak happens to coincide with or move away from the pilot signal. Namely, because equalization is performed on the actual signal of a carrier which is suffering interference, sometimes the interference is overlooked. Moreover, carriers adjacent to the carrier suffering the interference are also greatly affected by the equalization through the pilot signal suffering the interference. For this reason, when detecting same channel interference, in view of the fact that sometimes the interference detection is not always performed successfully, the weighting factors of not only the detected carrier, but also of the surrounding carriers are corrected.

Further, in multipass interference, the allocation of a weighting is appropriate because the amplitude - reliability processing is capable of being adapted in stages. However, when the noise is from same channel interference, the allocation of a weighting to the input of, for example, a Viterbi decoder, designed to be used for gauss noise and used in the error correction device 27, is not appropriate. Therefore, only a two stage evaluation of whether or not reliability exists, known as loss correction, is performed.

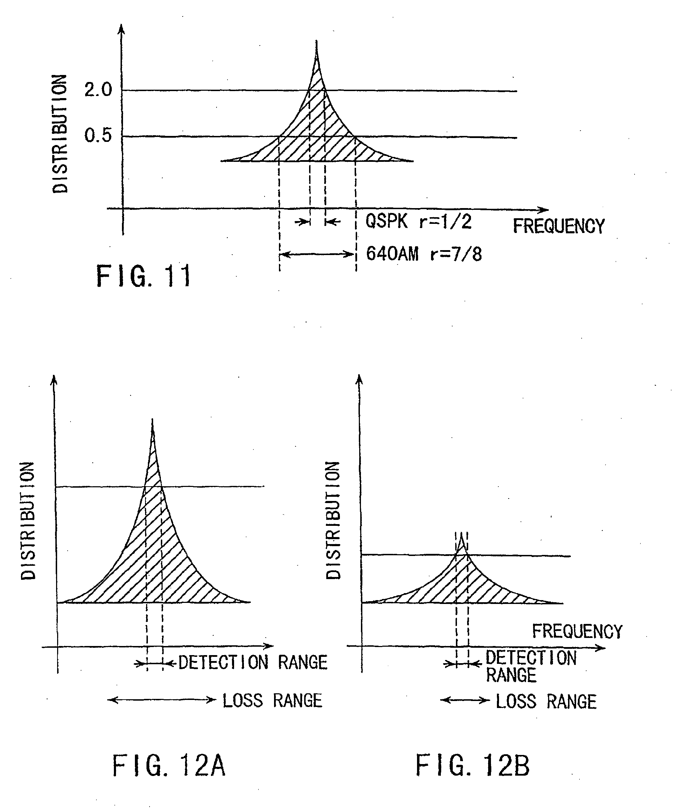

In the interference detection 24, when a determination is made as to whether or not to perform loss correction, the size of the interference is determined by whether or not a threshold value is exceeded. However, at that time, because even when the noise is the same, the amount of suitable loss differs depending on the strength of the encoding characteristics, i.e. the modulation format and different encoding ratios or different encoding formats, a plurality of loss levels are set. When the error correction is adapted, loss determination is made with consideration given to the value of the encoding ratio and the like. For example, as shown in FIG. 11, because QSPK when the encoding ratio is r = 1/2 is an extremely strong symbol with respect to interference, the threshold value is set at 2.0 and the amount of loss is decreased. Because QAM when the encoding ratio is r = 7/8 is an extremely weak symbol with respect to interference, the threshold value is set at the low value of 0.5 which is effective in raising the loss detection ability.

Moreover, because the greater the amount of interference, the wider the range affected by the interference, as shown in FIGS. 12A and 12B, the width of the adjacent carriers to be lost (the loss range) is widened according to the amplitude level of the distribution caused by the interference.

In the above, only a case involving distribution after error correction determination is performed was observed, however, if the pilot signal in that case is further observed, then even if processing by distribution is not performed when the amplitude of the pilot signal is small, because the reliability is lowered by the processing of weighting allocation, the same effect as loss correction is exhibited. Therefore, when the amplitude of the pilot signal is small, processing using distribution is not performed. The advantage of this method is that, in consideration of the fact that a signal having a low signal level which has been restored by force through equalization has low reliability, and the reliability of the distribution detection results is also low, it is preferable not to perform any processing.

The explanation given above was for when loss correction was performed on the vicinity of the portions suffering interference, however, naturally, it is also possible to allocate a weighting factor in such a way that soft decision in stages becomes possible.

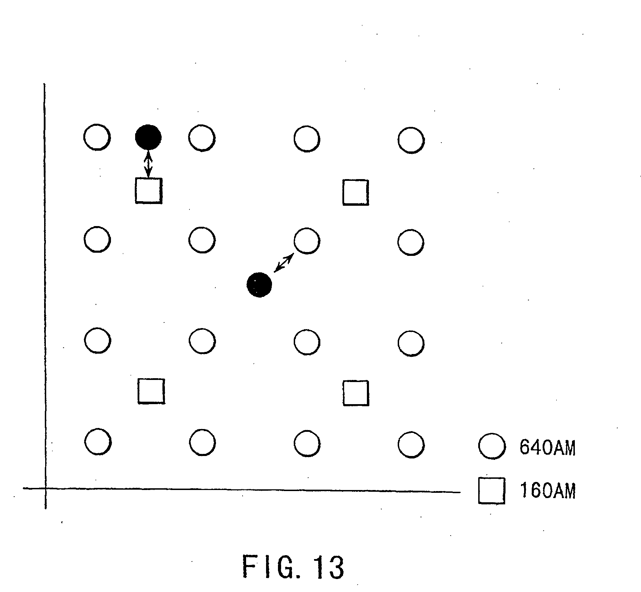

When obtaining a distribution, it is necessary for the representative symbol to be established in advance, however, in the ISDB-T format, which is a Japanese terrestrial digital broadcast format, because layered transmission is performed, interleaving processing needs to be performed first otherwise the modulation format cannot be ascertained. Because of this, hard processing becomes extremely difficult. For this reason, in the present embodiment, as shown in FIG. 13, the sum total of the representative symbol set of a plurality of modulation formats (64QAM and 16QAM in FIG. 13) is found and is defined as a new representative symbol point. The distances are then obtained between the reception symbol point and adjacent representative symbol points.

Specifically, after hard decision is performed for each modulation format, it is sufficient if the distances from the reception symbols are calculated and the minimum one obtained. In transmission conditions where correction is possible, the overriding majority of errors are errors in the vicinity of the originally transmitted representative symbol point and amount to no more than overlooking a portion of errors such as when a representative symbol point is mistaken for a representative symbol point of a different modulation format and, thus, do not obstruct the original object.

As described above, even when interference in the frequency selectivity is present, the characteristics can be effectively improved by performing error correction. For example, OFDM characteristics in 64QAM when the encoding ratio is r=7/8 require an interference ratio of 24 to 25 dB with respect to same channel interference in order to achieve an error ratio of 2E-4 after Viterbi decoding when no processing is performed. According to the present embodiment, however, it is possible to tolerate as much as 10 to 20 dB of interference.

Accordingly, in an error correction device having the above structure, when distribution values are seen in the carrier direction (frequency direction), a determination is made that a large portion of those distribution values comprise interference to frequency selectivity such as multipass, same channel interference, and spurious signals. A weighting allocation is then made on the basis of the extent of the reliability obtained by pilot interpolation with respect to the reception symbols of the large portion of distribution values. Therefore, a method based on reliability using pilot interpolation can be merged effectively with a differential method. Accordingly, more accurate loss correction can be performed and the error correction performance can be improved.

Note that the structure of the third embodiment may be realized by itself, however, if the structure is combined with the first or second embodiment, then, naturally, more effective error correction becomes possible.

Moreover, in the third embodiment, the OFDM format was used in the explanation, however, the third embodiment may also be applied to multiplex signals of other digital transmission formats with the same effects being obtained.

According to the present invention, as described above, an error correction device can be provided which performs effective error correction and improves characteristics even when frequency selectivity interference occurs in a receiver for receiving a frequency division multiplex signal.

## Claims

1. An error correction device for correcting errors in signals obtained by demodulating input digital signals, comprising:
an interference detection section (17, 21) for generating a signal representing how much a digital signal has been interfered while being transmitted to the error correction device;
weighting factor calculation means (18, 22) for calculating weighting factors for different transmission formats of the digital transmission signal;
weighting factor correction means (19) for correcting a weighting factor output from the weighting factor calculation means (18, 22) on the basis of the output from the interference detection section (17, 21);
a soft decision section (16) for allocating weighting to a demodulation signal of the digital transmission signal on the basis of a weighting factor output from the weighting factor correction means (19); and
an error correction section (20) for correcting errors in the output from the soft decision section (16);
**characterized in that** the weighting factor calculation means (18, 22) calculates a weighting factor for different transmission format encoding ratios or a weighting factor for different transmission format modulation methods.

2. An error correction device according to claim 1, **characterized in that** the interference detection section (17, 21) outputs analog interference ratios.

3. An error correction device according to claim 1 **characterized in that** the interference detection section (17, 21) outputs analog multipass ratios.

4. An error correction device according to claim 1, **characterized by** further comprising a tuner (11), adapted to receive a digital transmission signal, and a demodulation means (12-15) for demodulating the signal received by the tuner (11).

5. Receiver comprising an error correction device, receiver means adapted to receive frequency division multiplex transmission signals of a plurality of carriers whose pilot signals are inserted under uniform rules, detection means, adapted to orthogonally detect the reception signals, converting means adapted to convert the orthogonal detection output from a time domain into a frequency domain acquiring means adapted to acquire the signals of the plurality of carriers, extracting means adapted to extract the pilot signal from each carrier and generating means adapted to generate an interpolation signal for each reception symbol, equalizing means adapted to equalize and to demodulate the plurality of carrier signals on the basis of the pilot signals and the interpolation signals, wherein error correction device comprises:
weighting detection means (23) for determining the reliability of each of the plurality of carriers on the basis of the pilot signals and interpolation signals and calculating a weighting factor corresponding to the degree of the reliability;
distribution detection means (26) for performing hard decision on the demodulated signals, obtaining the differentials between the demodulated signals and the signals after hard decision, integrating the differential values in the time direction for the frequencies of each carrier and obtaining distribution values, and determining reliability from the size of the distribution values;
interference detection means (24) for detecting frequency selectivity interference from the degree of reliability obtained from at least one of the weighting detection means (23) and the distribution detection means (26) and correcting the weighting,factor obtained by the weighting detection means (23) on the basis of the result of the interference detection;
a soft decision section (25) for allocating a weighting to demodulated signal on the basis of the weighting factor output from the interference detection section (24) and performing a soft decision on the demodulated signal; and
an error correction section (27) for correcting errors output from the soft decision section (25); wherein
the interference detection means (24) switches the prescribed value for determining whether to perform loss correction according to at least one of the encoding ratio and the modulation format of the transmission signal.

6. A receiver according to claim 5, **characterized in that** the interference detection means (24) performs weighting factor correction processing on carriers in which interference is detected and also on a plurality of carriers adjacent to the carriers in which interference is detected.

7. A receiver according to claim 5, **characterized in that**, when the degree of reliability obtained from the distribution detection means (26) is below a prescribed value, the interference detection means (24) corrects the weighting factor so that the loss correction is performed in the error correction section (27).

8. A receiver according to claim 5, **characterized in that**, when the degree of reliability obtained by the weighting detection means (23) is smaller than a prescribed value, the interference detection means (24) does not perform the loss correction.

9. A receiver according to claim 5, **characterized in that** the distribution detection means (26) collects representative symbols of a plurality of modulation formats as the representative symbols of the hard decision, and regards the representative symbol having the shortest distance from the reception symbol as the hard decision value.

10. A receiver according to claim 5, **characterized by** further comprising a tuner (11) adapted to receive a digital transmission signal, and a demodulation means (12-15) for demodulating the signal received by the tuner (11).

## Patentansprüche

1. Fehlerkorrekturvorrichtung zum Korrigieren von Fehlern in Signalen, die durch Demodulieren von eingegebenen digitalen Signalen erhalten wurden, mit:
einem Störungserfassungsabschnitt (17,21) zum Erzeugen eines Signals, das darstellt, wie sehr ein digitales Signal gestört wurde, während es an die Fehlerkorrekturvorrichtung übertragen wurde;
einem Gewichtungsfaktorberechnungsmittel (18,22) zum Berechnen von Gewichtungsfaktoren für unterschiedliche Übertragungsformate des digitalen Übertragungssignals;
einem Gewichtungsfaktorkorrekturmittel (19) zum Korrigieren eines von dem Gewichtungsfaktorberechnungsmittel (18,22) ausgegeben Gewichtungsfaktors auf der Grundlage der Ausgabe von dem Störungserfassungsabschnitt (17,21);
einem Soft-Entscheidungsabschnitt (16) zum Zuordnen der Gewichtung zu einem Demodulationssignal des digitalen Übertragungssignals auf der Grundlage eines Gewichtungsfaktors, der von dem Gewichtungsfaktorkorrekturmittel (19) ausgegeben wurde; und
einem Fehlerkorrekturabschnitt (20) zum Korrigieren von Fehlern in der Ausgabe von dem Soft-Entscheidungsabschnitt (16);
**dadurch gekennzeichnet, dass** das Gewichtungsfaktorberechnungsmittel (18,22) einen Gewichtungsfaktor für unterschiedliche Übertragungsformatcodierverhältnisse oder einen Gewichtungsfaktor für unterschiedliche Übertragungsformatmodulationsverfahren berechnet.

2. Fehlerkorrekturvorrichtung gemäß Anspruch 1, **dadurch gekennzeichnet, dass** das Störungserfassungsmittel (17,21) analoge Störungsverhältnisse ausgibt.

3. Fehlerkorrekturvorrichtung gemäß Anspruch 1, **dadurch gekennzeichnet, dass** der Störungserfassungsabschnitt (17,21) analoge Mehrwegeverhältnisse ausgibt.

4. Fehlerkorrekturvorrichtung gemäß Anspruch 1, ferner **gekennzeichnet durch** einen Tuner (11), der angepasst ist, um ein digitales Übertragungssignal zu empfangen, und ein Demodulationsmittel (12-15) zum Demodulieren des von dem Tuner (11) empfangenen Signals.

5. Empfänger mit einer Fehlerkorrekturvorrichtung, einem Empfängermittel, das angepasst ist, um Frequenzteilungsmultiplexübertragungssignale einer Mehrzahl von Trägern zu empfangen, deren Pilotsignale unter gleichmäßigen Regeln eingefügt sind, ein Erfassungsmittel, das angepasst ist, um die Empfangssignale orthogonal zu erfassen, ein Umwandlungsmittel, das angepasst ist, um die ausgegebene orthogonale Erfassung von einem Zeitbereich in einen Frequenzbereich umzuwandeln, ein Erfassungsmittel, das angepasst ist, um die Signale der Mehrzahl von Trägern zu erfassen, ein Extrahierungsmittel, das angepasst ist, um das Pilotsignal von jedem Träger zu extrahieren, und ein Erzeugungsmittel, das angepasst ist, um ein Interpolationssignal für jedes Empfangssymbol zu erzeugen, ein Entzerrungsmittel, das angepasst ist, um die Mehrzahl von Trägersignalen auf der Grundlage der Pilotsignale und der Interpolationssignale zu entzerren und zu demodulieren, wobei die Fehlerkorrekturvorrichtung umfasst:
ein Gewichtungserfassungsmittel (23) zum Bestimmen der Zuverlässigkeit jedes der Mehrzahl von Trägern auf der Grundlage der Pilotsignale und Interpolationssignale und Berechnen eines Gewichtungsfaktors, der dem Grad der Zuverlässigkeit entspricht;
ein Verteilungserfassungsmittel (26) zum Durchführen einer Hard-Entscheidung an den demodulierten Signalen, zum Erhalten der Differenzen zwischen den demodulierten Signalen und den Signalen nach der Hard-Entscheidung, zum Integrieren der Differenzwerte in der Zeitrichtung für die Frequenzen jedes Trägers und zum Erhalten von Verteilungswerten, und zum Bestimmen der Zuverlässigkeit aus der Größe der Verteilungswerte;
ein Störungserfassungsmittel (24) zum Erfassen der Frequenzselektivitätsstörung aus dem Grad der Zuverlässigkeit, die von dem mindestens einen Gewichtungserfassungsmittel (23) oder dem Verteilungserfassungsmittel (26) erhalten wurde, und zum Korrigieren des durch das Gewichtungserfassungsmittel (23) erhaltenen Gewichtungsfaktors auf der Grundlage des Ergebnisses der Störungserfassung;
einen Soft-Entscheidungsabschnitt (25) zum Zuteilen einer Gewichtung zu dem demodulierten Signal auf der Grundlage des von dem Störungserfassungsabschnitt (24) ausgegebenen Gewichtungsfaktors und zum Durchführen einer Soft-Entscheidung an dem demodulierten Signal; und
einen Fehlerkorrekturabschnitt (27) zum Korrigieren von Fehlern, die von dem Soft-Entscheidungsabschnitt (25) ausgegeben wurden; wobei
das Störungserfassungsmittel (24) den vorgeschriebenen Wert zum Bestimmen, ob eine Verlustkorrektur gemäß mindestens dem Codierverhältnis oder dem Modulationsformat des Übertragungssignal durchzuführen oder nicht, umschaltet.

6. Empfänger gemäß Anspruch 5, **dadurch gekennzeichnet, dass** das Störungserfassungsmittel (24) eine Gewichtungsfaktorkorrekturverarbeitung an Trägern durchführt, bei denen Störung erfasst wird, und ebenfalls an einer Mehrzahl von Trägern benachbart den Trägern, in denen Störung erfasst wird.

7. Empfänger gemäß Anspruch 5, **dadurch gekennzeichnet, dass** wenn der durch das Verteilungserfassungsmittel (26) erhaltene Grad der Zuverlässigkeit unter einem vorgeschriebener Wert liegt, das Störungserfassungsmittel (24) den Gewichtungsfaktor korrigiert, so dass die Verlustkorrektur in dem Fehlerkorrekturabschnitt (27) durchgeführt wird.

8. Empfänger gemäß Anspruch 5, **dadurch gekennzeichnet, dass**, wenn der Grad der durch das Gewichtungserfassungsmittel (23) erhaltenen Zuverlässigkeit kleiner als ein vorgeschriebener Wert ist, das Störungserfassungsmittel (24) die Verlustkorrektur nicht durchführt.

9. Empfänger gemäß Anspruch 5, **dadurch gekennzeichnet, dass** das Verteilungserfassungsmittel (26) repräsentative Symbole einer Mehrzahl von Modulationsformaten als die repräsentierten Symbole der Hard-Entscheidung sammelt und das repräsentative Symbol mit dem kürzesten Abstand von dem Empfangssymbol als den Hard-Entscheidungswert betrachtet.

10. Empfänger gemäß Anspruch 5, ferner **gekennzeichnet durch** einen Tuner (11), der angepasst ist, um ein digitales Übertragungssignal zu empfangen, und ein Demodulationsmittel (12-15) zum Demodulieren des **durch** den Tuner (11) empfangenen Signals.

## Revendications

1. Dispositif de correction d'erreur pour corriger des erreurs dans des signaux obtenus en démodulant des signaux numériques d'entrée, comprenant :
une section de détection d'interférence (17, 21) pour générer un signal représentant le degré auquel un signal numérique a subi une interférence pendant sa transmission au dispositif de correction d'erreur ;
un moyen de calcul de facteur de pondération (18, 22) pour calculer les facteurs de pondération pour différents formats de transmission du signal de transmission numérique ;
un moyen de correction de facteur de pondération (19) pour corriger un facteur de pondération produit à partir du moyen de calcul de facteur de pondération (18, 22) sur la base de la sortie de la section de détection d'interférence (17, 21) ;
une section de décision douce (16) pour allouer une pondération à un signal de démodulation du signal de transmission numérique sur la base d'un facteur de pondération produit par le moyen de correction de facteur de pondération (19) ; et
une section de correction d'erreur (20) pour corriger des erreurs dans la sortie de la section de décision douce (16) ;
**caractérisé en** de que le moyen de calcul de facteur de pondération (18, 22) calcule un facteur de pondération pour différents rapports de codage de format de transmission ou un facteur de pondération pour différents procédés de modulation de format de transmission.

2. Dispositif de correction d'erreur selon la revendication 1, **caractérisé en ce que** la section de détection d'interférence (17, 21) produit des rapports d'interférence analogiques.

3. Dispositif de correction d'erreur selon la revendication 1, **caractérisé en ce que** la section de détection d'interférence (17, 21) produit des rapports de multipassage analogiques.

4. Dispositif de correction d'erreur selon la revendication 1, **caractérisé en ce qu'**il comprend en outre un syntoniseur (11) adapté pour recevoir un signal de transmission numérique, et un moyen de démodulation (12-15) pour démoduler le signal reçu par le syntoniseur (11).

5. Récepteur comprenant un dispositif de correction d'erreur, un moyen de récepteur adapté pour recevoir des signaux de transmission de multiplexage de division de fréquence d'une pluralité de porteuses dont les signaux pilotes sont insérés selon des règles uniformes, un moyen de détection adapté pour détecter orthogonalement les signaux de réception, un moyen de conversion adapté pour convertir la sortie de la détection orthogonale d'un domaine de temps en un domaine de fréquence, un moyen d'acquisition adapté pour acquérir les signaux de la pluralité de porteuses, un moyen d'extraction adapté pour extraire le signal pilote hors de chaque porteuse et un moyen de génération adapté pour générer un signal d'interpolation pour chaque symbole de réception, un moyen d'égalisation adapté pour égaliser et pour démoduler la pluralité de signaux porteurs sur la base des signaux pilotes et des signaux d'interpolation, dans lequel le dispositif de correction d'erreur comprend :
un moyen de détection de pondération (23) pour déterminer la fiabilité de chacune parmi la pluralité de porteuses sur la base des signaux pilotes et des signaux d'interpolation, et pour calculer un facteur de pondération correspondant au degré de fiabilité ;
un moyen de détection de distribution (26) pour exécuter une décision dure sur les signaux démodulés, pour obtenir les différences entre les signaux démodulés et les signaux après la décision dure, pour intégrer les valeurs de différence dans la direction du temps pour les fréquences de chaque porteuse et obtenir des valeurs de distribution, et pour déterminer la fiabilité à partir de la taille des valeurs de distribution ;
un moyen de détection d'interférence (24) pour détecter une interférence de sélectivité de fréquence à partir du degré de fiabilité obtenu à partir d'au moins soit le moyen de détection de pondération (23), soit le moyen de détection de distribution (26), et pour corriger le facteur de pondération obtenu par le moyen de détection de pondération (23) sur la base du résultat de la détection d'interférence ;
une section de décision douce (25) pour allouer une pondération au signal démodulé sur la base du facteur de pondération produit par la section de détection d'interférence (24), et pour exécuter une décision douce sur le signal démodulé ; et
une section de correction d'erreur (27) pour corriger des erreurs générées par la section de décision douce (25) ; dans lequel
le moyen de détection d'interférence (24) commute la valeur prescrite dans le but de déterminer s'il convient d'exécuter une correction de la perte conformément à au moins soit le rapport de codage, soit le format de modulation du signal de transmission.

6. Récepteur selon la revendication 5, **caractérisé en ce que** le moyen de détection d'interférence (24) exécute une opération de correction de facteur de pondération sur les porteuses dans lesquelles une interférence est détectée, et aussi sur une pluralité de porteuses adjacentes aux porteuses dans lesquelles une interférence est détectée.

7. Récepteur selon la revendication 5, **caractérisé en ce que** lorsque le degré de fiabilité obtenu auprès du moyen de détection de distribution (26) est inférieur à une valeur prescrite, le moyen de détection d'interférence (24) corrige le facteur de pondération de telle sorte que la correction de la perte soit exécutée dans la section de correction d'erreur (27).

8. Récepteur selon la revendication 5, **caractérisé en ce que** lorsque le degré de fiabilité obtenu par le moyen de détection de pondération (23) est plus petit qu'une valeur prescrite, le moyen de détection d'interférence (24) n'exécute pas la correction de la perte.

9. Récepteur selon la revendication 5, **caractérisé en ce que** le moyen de détection de distribution (26) collecte des symboles représentatifs d'une pluralité de formats de modulation comme symboles représentatifs de la décision dure, et considère les symboles représentatifs présentant la distance la plus courte par rapport au symbole de réception comme la valeur de décision dure.

10. Récepteur selon la revendication 5, **caractérisé en ce qu'**il comprend en outre un syntoniseur (11) adapté pour recevoir un signal de transmission numérique, et un moyen de démodulation (12-15) pour démoduler le signal reçu par le syntoniseur (11).
